(19) Europäisches Patentamt
European Patent Office
Office européen des brevets

(11) **EP 2 228 911 B1**

(12) **EUROPÄISCHE PATENTSCHRIFT**

(45) Veröffentlichungstag und Bekanntmachung des Hinweises auf die Patenterteilung:
**21.09.2016 Patentblatt 2016/38**

(51) Int Cl.:
***H04B 1/40*** *(2006.01)*

(21) Anmeldenummer: **10001746.6**

(22) Anmeldetag: **20.02.2010**

(54) **Verfahren und Vorrichtung zum gleichzeitigen Senden und/oder gleichzeitigen Empfangen von Signalen**

Method and device for transmitting and receiving signals simultaneously

Procédé et dispositif d'envoi et/ou de réception simultanée de signaux

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **09.03.2009 DE 102009011711**
**24.12.2009 DE 102009060353**

(43) Veröffentlichungstag der Anmeldung:
**15.09.2010 Patentblatt 2010/37**

(73) Patentinhaber: **Volkswagen Aktiengesellschaft**
**38440 Wolfsburg (DE)**

(72) Erfinder:
• **Kwoczek, Andreas**
**38165 Lehre (DE)**
• **Lübke, Andreas**
**38442 Wolfsburg (DE)**
• **Hermann, Daniel**
**09569 Oederan (DE)**
• **Hehn, Thorsten**
**38444 Wolfsburg (DE)**

(56) Entgegenhaltungen:
**EP-A2- 0 720 309 US-A- 5 550 813**
**US-B1- 6 681 100**

**Beschreibung**

Die Erfindung betrifft Verfahren und Vorrichtung zum gleichzeitigen Senden und/oder gleichzeitigen Empfangen von Signalen.

Über Wireless LAN sendende und empfangende Einrichtungen, insbesondere in Fahrzeugen, werden in Umgebungen genutzt, in denen die Eigenschaften der Übertragung sich schnell ändern und in denen ein Kommunikationsaustausch in sehr kurzen Zeiträumen erforderlich ist. Solche Kommunikationsverbindungen müssen sich sehr schnell auf- und wieder abbauen können. Sie eignen sich, um schnell lokal relevante Informationen unter Verkehrsteilnehmern zu verbreiten. Fahrzeuge bilden unter sich und mit Basisstationen an Straßen selbst organisierende spontane (Ad-hoc) Kommunikationsnetze, die auch bei hohen Geschwindigkeiten der Fahrzeuge zuverlässig funktionieren müssen.

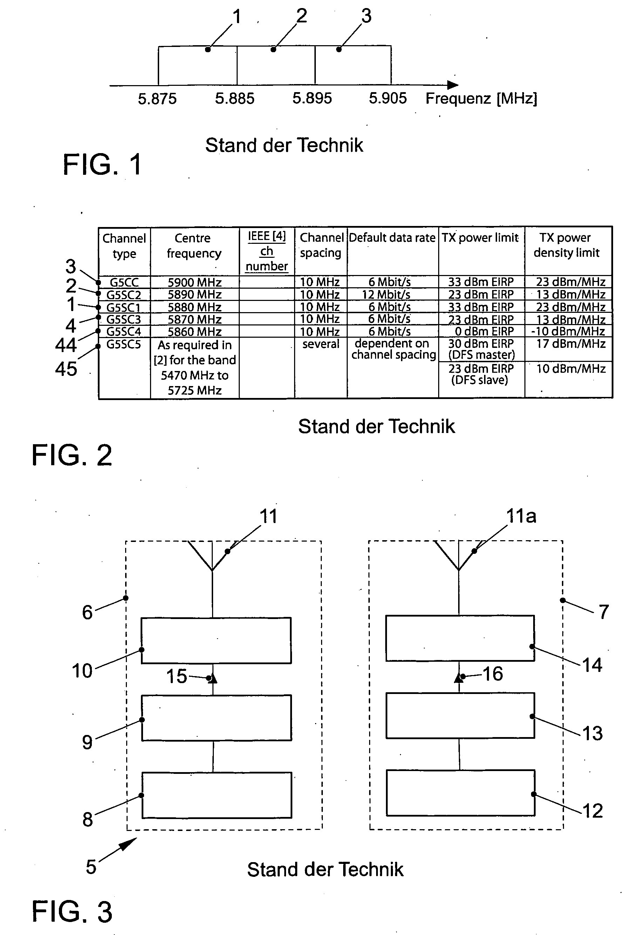

Um einen schnelleren Auf- und Abbau einer Kommunikationsverbindung als bei heutiger Infrastruktur realisiert zu erreichen, erfolgt mittels einer vereinfachten Anmeldeprozedur die parallele Nutzung von mehreren drahtlosen Kanälen und der Festlegung eines Steuerungskanals. Fig. 1 zeigt eine Anordnung von zwei Servicekanälen und einem Steuerungskanal im Frequenzbereich, wobei die Servicekanäle und der Steuerungskanal parallel genutzt werden können.

Für die WLAN-Kommunikation mit Fahrzeugen sind insbesondere der Steuerungskanal und mindestens ein Servicekanal notwendig. Eine in der europäischen Union geplante Frequenznutzung ist in einer Frequenzzuordnungstabelle beispielhaft in Fig. 2 dargestellt. Die Frequenzzuordnungstabelle zeigt hierbei einen Steuerungskanal (G5CC), vier feste und einen variablen Servicekanal (G5SC1, G5SC2, G5SC3, G5SC4, G5SC5). Hierbei dient der Steuerungskanal (G5CC) einer Kommunikation in Anwendungen, die z.B. für eine Verkehrssicherheit und oder einen Verkehrsfluss relevant sind. Auch kann der Steuerungskanal (G5CC) genutzt werden, um Anwendungen auf den Servicekanälen (G5SC1, G5SC2, G5SC3, G5SC4, G5SC5) anzukündigen. Z.B. können auf dem Steuerungskanal (G5CC) periodisch Beacons ausgesendet werden, die die verfügbaren Anwendungen der anderen Kanäle und Notfallwarnungen von den Fahrzeugen und Basisstationen an den Straßen bekannt geben. Ein Beacon gibt hierbei z.B. die Existenz des Netzwerkes an alle "Zuhörer" im Empfangsbereich bekannt. Neben verschiedenen Parametern des WLANs kann auch der SSID (Service Set Identifier) bekannt gegeben werden. Alle Netzwerkknoten müssen den Steuerungskanal periodisch abhören. Alle Sendewünsche für andere Kanäle müssen dem Zielknoten zunächst auf dem Steuerungskanal mitgeteilt, um eine Priorisierung von Daten zu ermöglichen. So soll wichtigen Daten zu Sicherheitsinformationen Vorrang gewährt werden. Daher ist eine möglichst hohe Empfangsbereitschaft insbesondere für den Steuerungskanal vorteilhaft. Die Servicekanäle (G5SC1, G5SC2) dienen beispielsweise ebenfalls der Kommunikation in Anwendungen, die für eine Verkehrssicherheit und oder einen Verkehrsfluss relevant sind. Die Servicekanäle (G5SC3, G5SC4, G5SC5) dienen weiteren Anwendungen. Selbstverständlich können hinsichtlich einer Berücksichtigung von Emissionsbeschränkungen, z.B. einer Beschränkung der Sendeleistung oder Sendeleistungsdichte, strengere als die in Fig. 2 dargestellten Kriterien gelten. Weiter selbstverständlich können für Länder außerhalb der Europäischen Union andere Frequenzzuordnungen vorgesehen sein.

Um den Zeitraum, in der die Einrichtung auf dem Steuerungskanal empfangsbereit ist, möglichst groß zu halten, ist eine Einrichtung mit je einer Antenne pro Kanal mit je einer Schaltung für eine Sende- oder Empfangsverstärkung wünschenswert. Fig. 3 zeigt eine solche Einrichtung bei der eine erste Schaltung zur Basisbandverarbeitung und eine erste Schaltung zur Hochfrequenzverarbeitung ein erstes Sendesignal erzeugt, eine Schaltung zur Sendeverstärkung das erste Sendesignal verstärkt und das erste Sendesignal über eine erste Antenne gesendet wird. Auch kann über die erste Antenne ein erstes Empfangssignal empfangen, mittels einer Schaltung zur Empfangsverstärkung verstärkt und an die erste Schaltung zur Hochfrequenzverarbeitung und an die erste Schaltung zur Basisbandverarbeitung übertragen werden. Die in Fig. 3 dargestellte Einrichtung umfasst weiter ein zweite Schaltung zur Basisbandverarbeitung, eine zweite Schaltung zur Hochfrequenzverarbeitung, eine zweite Schaltung zur Sendeverstärkung und eine zweite Schaltung zur Empfangsverstärkung sowie eine zweite Antenne, wobei in analoger Weise ein zweites Sendesignal gesendet oder eine zweites Empfangssignal empfangen werden kann. Hierbei müssen die Antennen mit deutlichem Abstand voneinander montiert werden, was aufgrund von Design- und Kostenaspekten nicht vorteilhaft ist.

Eine weitere Möglichkeit, ein gleichzeitiges Senden und/oder gleichzeitiges Empfangen zu ermöglichen und somit eine hohe Verfügbarkeit insbesondere eines Steuerkanals zu gewährleisten besteht in einer so genannten Kanalumschaltung (Channel Switching), wobei zwischen dem Steuerkanal und beispielsweise einem Servicekanal umgeschaltet wird.

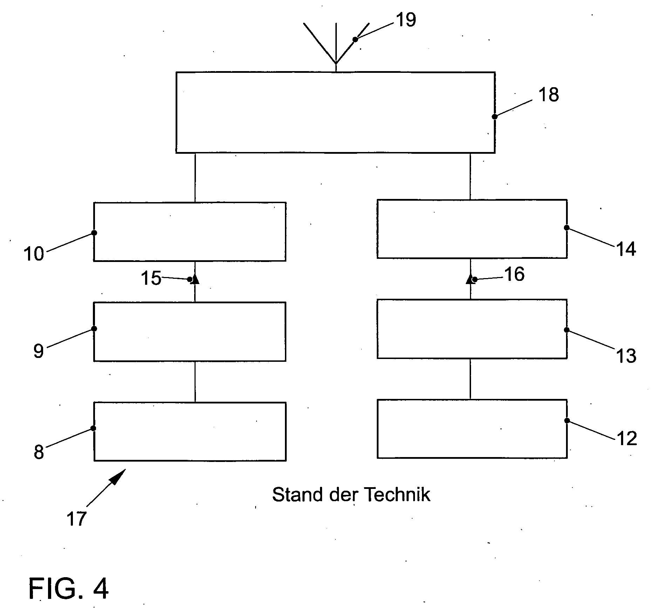

Eine weitere Möglichkeit für ein gleichzeitiges Senden und/oder gleichzeitiges Empfangen kann über eine einfache Kombination der Antennen mit einer Schaltung für eine Leistungsteilung bzw. Leistungssummierung erreicht werden. Die Schaltung für eine Leistungsteilung bzw. Leistungssummierung ist zwischen Antenne und der ersten und zweiten Schaltung für eine Empfangs- bzw. Sendeverstärkung angeordnet (siehe Fig. 4). Diese Anordnung führt zu einer erhöhten Empfangsrauschzahl und einer deutlich erhöhten, erforderlichen Sendeleistung.

Die US 5,550,813 offenbart ein Sende-Empfangs-System einer Mobiltelefon-Basisstation. Dieses umfasst Antennenmittel zum Austrahlen und Detektieren von ersten und zweiten breitbandigen Sende- und Empfangssignalen, die jeweils in engere Bänder aufgeteilt sind, um eine Vielzahl von gemeinsamen Kanälen bereitzustellen und um verschiedene Konversationen in diesen Kanälen zu ermöglichen. Weiter umfasst das Sende-Empfangs-System eine Transmittervorrichtung, einen Signalkombinierer und eine Empfangsvorrichtung.

Die EP 0 720 309 A2 offenbart ein schmalbandiges/breitbandiges Informationsverteilungssystem. Die Druckschrift beschreibt, dass eingehende und ausgehende RF-Signale durch einen Duplexfilter verarbeitet werden, der die Nutzung einer Antenne sowohl für das Senden als auch das Empfangen von RF-Signalen erlaubt. Weiter beschrieben ist, dass eine Abwärtsstrecke mit einem LNA verbunden ist. Weiter beschrieben ist, dass Signale über Filter, einen Verstärker, einen Splitter und eine Aufwärtsstrecke des Duplexfilters übertragen werden.

Es stellt sich das technische Problem, ein Verfahren und eine Vorrichtung zum gleichzeitigen Senden und/oder gleichzeitigen Empfangen von Signalen zu schaffen, welche einen kostengünstigen und platzsparenden Aufbau der Vorrichtung und einen verbesserte Verfügbarkeit, insbesondere eine gesteigerte Empfangsbereitschaft zumindest eines Kanals, insbesondere eines Steuerungskanals, ermöglichen. Weiter stellt sich das technische Problem, ein Verfahren und eine Vorrichtung mit einer geringen Dämpfung der Empfangs- bzw. Sendeleistung sowie einem geringen Rauschanteil am Empfangs- und/oder Sendesignal zu schaffen.

Vorgeschlagen wird ein Verfahren zum gleichzeitigen Senden mindestens eines ersten und eines zweiten Sendesignals oder gleichzeitigen Empfangen eines ersten und eines zweiten Empfangssignals mittels einer Antenne. Hierbei erzeugt eine erste Sendeeinrichtung das erste Sendesignal. Das erste Empfangssignal wird von einer ersten Empfangseinrichtung empfangen. Hierbei kann das erste Empfangssignal auch in einem kombinierten Empfangssignal enthalten sein, wobei das kombinierte Empfangssignal von der ersten Empfangseinrichtung empfangen werden kann. Die erste Sendeeinrichtung und die erste Empfangseinrichtung können hierbei in eine erste Sende- und Empfangseinrichtung integriert sein, wobei die erste Sende- und Empfangseinrichtung das erste Sendesignal senden und das erste Empfangssignal empfangen kann. Analog wird das zweite Sendesignal von einer zweiten Sendeeinrichtung erzeugt und das zweite Empfangssignal von einer zweiten Empfangseinrichtung empfangen. Die zweite Sendeeinrichtung und die zweite Empfangseinrichtung können hierbei auch in eine zweite Sende- und Empfangseinrichtung integriert sein.

Bei einem gleichzeitigen Senden des ersten und des zweiten Sendesignals wird das erste Sendesignal und das zweite Sendesignal datentechnisch an eine Schaltung zur Leistungssummierung übertragen. Mittels der Schaltung zur Leistungssummierung wird das erste und das zweite Sendesignal, insbesondere die Leistungen des ersten und des zweiten Sendesignals, zu einem kombinierten Sendesignal summiert. Das kombinierte Sendesignal wird dann datentechnisch an eine Schaltung zur Sendeverstärkung übertragen. Mittels der Schaltung zur Sendeverstärkung wird das kombinierte Sendesignal mit einer vorbestimmten Sendeverstärkung verstärkt. Das derart verstärkte, kombinierte Sendesignal wird dann mittels der einen Antenne gesendet.

Beim gleichzeitigen Empfangen des ersten und des zweiten Empfangssignals wird ein kombiniertes Empfangssignal mittels der einen Antenne empfangen. Das kombinierte Empfangssignal beinhaltet hierbei das erste und das zweite Empfangssignal. Das erste und das zweite Empfangssignal können hierbei beispielsweise über zwei verschiedene Kanäle übertragen werden. Beispielsweise kann das erste Empfangssignal über einen Steuerungskanal und das zweite Empfangssignal über einen Servicekanal übertragen werden, wobei mittels der einen Antenne das erste und das zweite Empfangssignal gleichzeitig empfangen werden können. Das kombinierte Empfangssignal wird von der einen Antenne datentechnisch an eine Schaltung zur Empfangsverstärkung übertragen. Mittels der Schaltung zur Empfangsverstärkung wird das kombinierte Empfangssignal mit einer vorbestimmten Empfangsverstärkung verstärkt. Das derart verstärkte kombinierte Empfangssignal wird dann an eine Schaltung zur Leistungsteilung datentechnisch übertragen. Mittels der Schaltung zur Leistungsteilung wird das verstärkte, kombinierte Empfangssignal leistungstechnisch geteilt, wobei ein erster Teil des verstärkten, kombinierten Empfangssignals an die erste Empfangseinrichtung und ein zweiter Teil des verstärkten, kombinierten Empfangssignals an die zweite Empfangseinrichtung datentechnisch übertragen wird. Der erste und der zweite Teil beinhalten hierbei jeweils noch das erste und das zweite Empfangssignal, jedoch ist die Leistung des ersten und des zweiten Teils im Vergleich zum kombinierten Empfangssignal verringert. Die erste Empfangseinrichtung filtert aus dem ersten Teil des verstärkten, kombinierten Empfangssignals das erste Empfangssignal, die zweite Empfangseinrichtung filtert aus dem zweiten Teil des verstärkten, kombinierten Empfangssignals das zweite Empfangssignal. Vorzugsweise teilt sich die Leistung des verstärkten, kombinierten Empfangssignals zur Hälfte auf den ersten Teil und zur Hälfte auf den zweiten Teil auf. Selbstverständlich sind auch andere Verhältnisse der Aufteilung denkbar. Z.B. kann die Leistung des ersten Teils in einem Intervall von z.B. 10 bis 90 Prozent, vorzugsweise 40 bis 60 Prozent, der Leistung des verstärkten, kombinierten Empfangssignals liegen. Dementsprechend beträgt die Leistung des zweiten Teils 90 bis 10 Prozent, vorzugsweise 60 bis 40 Prozent, der Leistung des verstärkten, kombinierten Empfangssignals.

Die Schaltung zur Empfangsverstärkung kann hierbei auch als Schaltung zur Sendeverstärkung dienen. Hierbei kann die vorbestimmte Sendeverstärkung gleich der vorbestimmten Empfangsverstärkung sein.

Das erfindungsgemäße Verfahren ist somit mittels einer kostengünstigen und platzsparenden Vorrichtung mit nur einer Antenne durchführbar, wobei eine Sendebereitschaft der ersten und zweiten Sendeeinrichtung und/oder eine Empfangsbereitschaft der ersten und zweiten Empfangseinrichtung über einen ähnlich großen Zeitraum und eine ähnlichen Rauschzahl wie die in Fig. 3 dargestellte Lösung mit zwei Antennen gewährleistet werden. Weiter vorteilhaft ermöglicht die Erfindung im Vergleich zu der in Fig. 4 dargestellten Lösung einen kostengünstigen Aufbau einer Vorrichtung zur Durchführung des erfindungsgemäßen Verfahrens, da eine Schaltung zur Sendeverstärkung oder eine Schaltung zur Empfangsverstärkung eingespart wird. Zudem ergibt sich vorteilhaft eine vergleichsmäßig verbesserte Empfangsrauschzahl und eine deutlich niedrigere erforderliche Sendeleistung.

Weiter ist die Schaltung zur Leistungsteilung schaltungstechnisch zwischen der Schaltung zur Empfangsverstärkung und der ersten und zweiten Empfangseinrichtung angeordnet. Die Schaltung zur Empfangsverstärkung kann beispielsweise ein rauscharmer Vorverstärker (LNA) sein. Die erste Empfangseinrichtung kann hierbei eine erste Schaltung zur Hochfrequenzverarbeitung und die zweite Empfangseinrichtung eine zweite Schaltung zur Hochfrequenzverarbeitung umfassen. Dann erfolgt die Erhöhung einer Empfangsrauschzahl aufgrund der Anordnung der Schaltung für die Leistungsteilung zwischen dem rauscharmen Vorverstärker (LNA) und der Hochfrequenzverarbeitung nur im Rahmen der Friis-Formel für die Rauschzahl

$$F_{receiver} = F_1+(F_2-1)/G_1+(F_3-1)/(G_1 G_2)+(F_4-1)/(G_1 G_2 G_3)+... \qquad \text{Formel 1}$$

mit $F_n$ als Rauschzahl und $G_n$ als Verstärkung der n-ten Stufe. Dämpfungsglieder, beispielsweise Kabel, haben eine Verstärkung, die kleiner als Eins ist. Für den Sonderfall eines rauscharmen Vorverstärkers (LNA) als erste Stufe gilt für die Rauschzahl

$$F_{receiver} = F_{LNA}+(F_{rest}-1)/G_{LNA} \qquad \text{Formel 2}$$

wobei $F_{LNA}$ die Rauschzahl und $G_{LNA}$ die Verstärkung des rauscharmen Vorverstärkers (LNA) und $F_{rest}$ die gesamte Rauschzahl der folgenden Stufen bezeichnet. Nach Formel 2 kann ein rauscharmer Vorverstärker die Rauschzahl einer Verstärkerkette verringern, sofern die Verstärkung genügend hoch ist. Je höher die LNA-Verstärkung $G_{LNA}$ ist, desto geringer ist der Einfluss der Verstärkung der Schaltung für die Leistungsteilung.

Beim gleichzeitigen Senden kann eine Kompensation von Verlusten durch die Schaltung zur Leistungssummierung kostengünstig in der ersten und zweiten Schaltung zur Hochfrequenzverarbeitung realisiert werden, so dass die Schaltung zur Sendeverstärkung, also ein Sendeverstärker, keine höhere Ausgangsleistung benötigt.

Das erfindungsgemäße Verfahren ermöglicht ein gleichzeitiges Empfangen und/oder ein gleichzeitiges Senden auf zwei Kanälen. Selbstverständlich ist das erfindungsgemäße Verfahren auch auf ein gleichzeitiges Empfangen und/oder gleichzeitiges Senden auf mehreren Kanälen erweiterbar. Durch die Ermöglichung des gleichzeitigen Empfangens oder des gleichzeitigen Sendens kann die Empfangsbereitschaft insbesondere für einen Steuerungskanal deutlich gegenüber einem willkürlichen Umschalten zwischen Senden und Empfangen auf dem Steuerungskanal oder dem Servicekanal gesteigert werden. Das Senden auf dem Servicekanal kann so gesteuert werden, dass es gleichzeitig mit dem Senden auf dem Steuerungskanal erfolgt. Gleiches gilt für das Empfangen auf dem Servicekanal und dem Empfangen auf dem Steuerungskanal. So kann der Zeitraum, in dem ein Senden und Empfangen auf dem Steuerungskanal und dem Servicekanal möglich ist, zusätzlich deutlich vergrößert werden. Als weitere Möglichkeit kann bei einer ständigen Verfügbarkeit des Steuerungskanals zusätzlich ein Channel Switching zwischen den weiteren Kanälen, insbesondere Servicekanäle, erfolgen. Wenn nicht gesendet wird, so ist der Steuerungskanal empfangstechnisch immer erreichbar, wobei auch alle anderen Kanäle in Intervallen entsprechend einer Empfangsphase der Intervalle erreichbar sind.

Weiter kann vorgesehen sein, dass der Steuerkanal kontinuierlich empfangsbereit sein muss, wenn nicht auf dem Steuerkanal gesendet wird. Eine Einkanalumschaltung (Einchannelswitching) kann hierbei nur für die Servicekanäle vorgesehen sein. Alternativ kann ein so genanntes "Time Division Multiple Access"-Verfahren durchgeführt werden, Hierbei werden nicht parallel über mindestens zwei Sende- und Empfangskanäle sondern über nur einen Sende- und Empfangskanal Signale gesendet oder empfangen. Eine Umschaltung zwischen dem Steuerkanal und dem mindestens einen Servicekanal kann dann beispielsweise synchronisiert zu einer GPS-Uhr erfolgen.

Weiter wird mittels mindestens eines Umschalters die Schaltung zur Sendeverstärkung oder die Schaltung zur Empfangsverstärkung ausgewählt. Hierdurch ergibt sich in vorteilhafter Weise, dass beim gleichzeitigen Senden die Schaltung zur Sendeverstärkung mit einer vorbestimmten Sendeverstärkung in einen Signalübertragungspfad von der ersten und zweiten Sendeeinrichtung zu der einen Antenne und beim gleichzeitigen Empfangen die Schaltung zur Empfangsverstärkung mit einer vorbestimmten Empfangsverstärkung in einen Signalübertragungspfad von der einen Antenne zu der ersten und der zweiten Empfangseinrichtung geschaltet werden kann.

Alternativ kann eine Schaltung zur Sende- und Empfangsverstärkung die Schaltung zur Sendeverstärkung und die Schaltung zur Empfangsverstärkung umfassen. Hierdurch ergibt sich in vorteilhafter Weise eine bauliche Integration der Schaltung zur Sendeverstärkung und der Schaltung zur Empfangsverstärkung. In diesem Fall kann mittels des mindestens einen Umschalters in der Schaltung zur Sende- und Empfangsverstärkung die vorbestimmte Sende- und Empfangsverstärkung ausgewählt werden.

Auch ist vorstellbar, dass nicht nur die eine vorbestimmte Sendeverstärkung oder die eine vorbestimmte Empfangsverstärkung sondern weitere vorbestimmte Sendeverstärkungen oder Empfangsverstärkungen ausgewählt werden können. Hierfür können z.B. mehrere Schaltungen zur Sendeverstärkung und/oder mehrere Schaltungen zur Empfangsverstärkung vorgesehen sein.

Vorzugsweise kann mittels zweier Umschalter die Schaltung zur Sendeverstärkung in den Signalübertragungspfad von der ersten und zweiten Sendeeinrichtung zu der einen Antenne geschaltet werden. Hierbei ist ein erster Umschalter an dem antennenseitigen Ausgang der Schaltung zur Sendeverstärkung und ein zweiter Umschalter am sendeeinrichtungsseitigen Ausgang der Schaltung zur Sendeverstärkung angeordnet. Analog kann die Schaltung zur Empfangsverstärkung mittels zweier Umschalter in einen Signalübertragungspfad von der einen Antenne zu der ersten und der zweiten Empfangseinrichtung geschaltet werden.

In einer weiteren Ausführungsform wird über einen Steuerungskanal das erste Sendesignal und über mindestens einen weiteren Kanal das zweite Sendesignal gesendet oder über den Steuerungskanal das erste Empfangssignal und über den mindestens einen weiteren Kanal das zweite Empfangssignal empfangen. Selbstverständlich kann das erste Sendesignal auch über den mindestens einen weiteren Kanal gesendet oder das erste Empfangssignal über den mindestens einen weiteren Kanal empfangen werden, wobei dann das zweite Sendesignal oder das zweite Empfangssignal über den Steuerungskanal gesendet oder empfangen wird.

Der mindestens eine weitere Kanal kann ein Servicekanal sein. Hierdurch wird, inbesondere in einer Fahrzeugkommunikation über W-LAN, gewährleistet, dass ein Steuerungskanal ständig zur Übertragung beispielsweise von Sendewünschen über den Servicekanal zur Verfügung steht, wodurch beispielsweise eine Priorisierung von Daten bei der Datenübertragung ermöglicht wird. Auch wird in vorteilhafter Weise gewährleistet, dass eine ständige Empfangsbereitschaft insbesondere für den Steuerungskanal besteht.

In einer weiteren Ausführungsform wird das zweite Sendesignal über weitere Kanäle gesendet oder das zweite Empfangssignal über die weiteren Kanäle empfangen, wobei ein Umschalten zwischen den weiteren Kanälen erfolgt. Die weiteren Kanäle sind beispielsweise weitere Servicekanäle. Hierbei steht der Steuerungskanal ständig zur Verfügung, während in vorteilhafter Weise eine Kanalumschaltung zwischen den mehreren Servicekanälen erfolgen kann. Hierdurch kann in vorteilhafter Weise eine Datenübertragung, insbesondere bei der Fahrzeugkommunikation über W-LAN, über mehrere Servicekanäle erfolgen, während der Steuerungskanal eine hohe, insbesondere ständige, Verfügbarkeit aufweist.

Vorgeschlagen wird weiter eine Vorrichtung zum gleichzeitigen Senden mindestens eines ersten Sendesignals und eines zweiten Sendesignals und/oder zum gleichzeitigen Empfangen eines ersten und eines zweiten Empfangssignals. Die Vorrichtung umfasst eine Antenne, mindestens eine erste und eine zweite Sendeeinrichtung und/oder mindestens eine erste und eine zweite Empfangseinrichtung. Mittels der ersten Sendeeinrichtung ist das erste Sendesignal und mittels der zweiten Sendeeinrichtung das zweite Sendesignal erzeugbar. Analog ist mittels der ersten Empfangseinrichtung das erste Empfangssignal und mittels der zweiten Empfangseinrichtung das zweite Empfangssignal empfangbar.

Weiter umfasst die Vorrichtung eine Schaltung zur Leistungssummierung und eine Schaltung zur Sendeverstärkung. Das erste Sendesignal und das zweite Sendesignal sind mittels der Schaltung zur Leistungssummierung zu einem kombinierten Sendesignal summierbar. Das kombinierte Sendesignal ist mittels der Schaltung zur Sendeverstärkung verstärkbar und mittels der Antenne sendbar.

Kumulativ umfasst die Vorrichtung eine Schaltung zur Leistungsteilung und eine Schaltung zur Empfangsverstärkung, wobei ein kombiniertes Empfangssignal mittels der Antenne empfangbar, mittels der Schaltung zur Empfangsverstärkung verstärkbar und mittels der Schaltung zur Leistungsteilung in einen ersten Teil des kombinierten Empfangssignals und einen zweiten Teil des kombinierten Empfangssignals teilbar ist. Mittels der ersten Empfangseinrichtung ist das erste Empfangssignal aus dem ersten Teil des kombinierten Empfangssignals und mittels der zweiten Empfangseinrichtung ist das zweite Empfangssignal aus dem zweiten Teil des kombinierten Empfangssignals filterbar. Mittels der vorgeschlagenen Vorrichtung (Anordnung) ist in vorteilhafter Weise eines der vorhergehend beschriebenen Verfahren zum gleichzeitigen Senden und/oder zum gleichzeitigen Empfangen durchführbar.

Weiter umfasst die Vorrichtung mindestens einen Umschalter, wobei mittels des mindestens einen Umschalters die Schaltung zur Sendeverstärkung oder die Schaltung zur Empfangsverstärkung oder mittels des mindestens einen Umschalters in der Schaltung zur Sende- und Empfangsverstärkung eine Sende- oder Empfangsverstärkung auswählbar ist. Hierdurch ergibt sich in vorteilhafter Weise, dass wahlweise die Schaltung zur Sendeverstärkung in den Signalübertragungspfad von der ersten und zweiten Sendeeinrichtung zu der einen Antenne oder die Schaltung zur Empfangsverstärkung in den Signalübertragungspfad von der einen Antenne zu der ersten und der zweiten Empfangseinrichtung geschaltet werden kann.

In einer weiteren Ausführungsform ist die Schaltung zur Leistungssummierung und die Schaltung zur Leistungsteilung als eine Schaltung zur Leistungssummierung und -teilung ausgeführt. Hierdurch ergibt sich in vorteilhafter Weise eine bauliche Integration der Schaltung zur Leistungsteilung und der Schaltung zur Leistungssummierung. Vorzugsweise ist die Schaltung zur Leistungssummierung und -teilung ein Wilkinson-Teiler/-Summierer. Hierdurch ergibt sich in vorteilhafter Weise, dass bei einer richtigen Dimensionierung ein Wilkinson-Teiler/- Summierer verlustfrei arbeitet. Hierbei teilt sich eine eingespeiste Hochfrequenz-Leistung zu je 50 Prozent (-3dB) auf.

Durch die erfindungsgemäße Anordnung wird der Rauschanteil der Vorrichtung (Gesamteinrichtung) deutlich weniger als die in Fig. 4 dargestellte Lösung erhöht.

In einer weiteren Ausführungsform ist die Schaltung zur Sendeverstärkung und die Schaltung zur Empfangsverstärkung als eine Schaltung zur Sende- und Empfangsverstärkung ausgebildet. Hierdurch ergibt sich in vorteilhafter Weise eine bauliche Integration und damit ein verringerter Platzbedarf für die erfindungsgemäße Vorrichtung.

In einer weiteren Ausführungsform umfasst die erste Sendeeinrichtung oder die erste Empfangseinrichtung eine erste Schaltung zur Hochfrequenzverarbeitung und/oder eine erste Schaltung zur Basisbandverarbeitung. Weiter umfasst die zweite Sendeeinrichtung oder die zweite Empfangseinrichtung eine zweite Schaltung zur Hochfrequenzverarbeitung und/oder eine zweite Schaltung zur Basisbandverarbeitung. Hierdurch ergibt sich in vorteilhafter Weise, dass Signale über hohe und niedrige Frequenzen gleichzeitig gesendet oder empfangen werden können.

Die Erfindung wird anhand eines Ausführungsbeispiels näher erläutert. Die Figuren zeigen:

Fig. 1     eine beispielhafte Frequenz-Kanal-Aufteilung (Stand der Technik),

Fig. 2     eine in der europäischen Union geplante Frequenznutzung des Steuerungskanals und von fünf Servicekanälen (Stand der Technik),

Fig. 3     ein schematisches Blockschaltbild einer Vorrichtung zum gleichzeitigen Senden und/oder gleichzeitigen Empfangen von Signalen (Stand der Technik),

Fig. 4     ein schematisches Blockschaltbild einer weiteren Vorrichtung zum gleichzeitigen Senden und/oder gleichzeitigen Empfangen von Signalen (Stand der Technik),

Fig. 5     ein schematisches Blockschaltbild einer erfindungsgemäßen Vorrichtung zum gleichzeitigen Senden und/oder gleichzeitigen Empfangen von Signalen,

Fig. 6     ein weiteres schematisches Blockschaltbild der in Fig. 5 dargestellten erfindungsgemäßen Vorrichtung zum gleichzeitigen Senden und/oder gleichzeitigen Empfangen von Signalen,

Fig. 7     ein schematisches Blockschaltbild eines Wilkinson-Summierers/-Teilers,

Fig. 8     eine beispielhafte Signalgliedkette und

Fig. 9     eine Übersicht über Sende- und Empfangszeiten mit einer Antenne.

In der folgenden Beschreibung bezeichnen gleiche Bezugszeichen Elemente mit gleichen oder ähnlichen technischen Eigenschaften.

Fig. 1 zeigt eine beispielhafte Kanalaufteilung für einen Servicekanal 1, einen weiteren Servicekanal 2 und einen Steuerungskanal 3 über einer Frequenz. Gemäß der dargestellten Frequenz-Kanal-Aufteilung kann eine parallele Nutzung von mehreren z.B. drahtlosen Servicekanälen 1, 2 und einem Steuerungskanal 3 z.B. in einer Fahrzeugkommunikation erfolgen.

Fig. 2 zeigt eine in der europäischen Union geplante Frequenznutzung eines Steuerungskanals 3 und weiterer Servicekanäle 1, 2, 4, 44, 45.

Fig. 3 zeigt ein schematisches Blockschaltbild einer Vorrichtung 5 zum gleichzeitigen Senden und/oder gleichzeitigen Empfangen von zwei Signalen. Die Vorrichtung 5 umfasst hierbei einen ersten Signalübertragungspfad 6 und einen zweiten Signalübertragungspfad 7. Im ersten Signalübertragungspfad 6 ist eine erste Schaltung 8 zur Basisbandverarbeitung, eine erste Schaltung 9 zur Hochfrequenzverarbeitung, eine erste Schaltung 10 zur Sende- und Empfangsverstärkung und eine erste Antenne 11 angeordnet. Der zweite Signalübertragungspfad 7 ist gleichartig aufgebaut und umfasst eine zweite Schaltung 12 zur Basisbandverarbeitung, eine zweite Schaltung 13 zur Hochfrequenzverarbeitung , eine zweite Schaltung 14 zur Sende- und Empfangsverstärkung und eine zweite Antenne 11 a. Beim gleichzeitigen Senden erzeugen die erste Schaltung 8 zur Basisbandverarbeitung und die erste Schaltung 9 zur Hochfrequenzverarbeitung ein erstes Sendesignal 15. Das erste Sendesignal 15 wird mittels der ersten Schaltung 10 zur Sende- und Empfangsverstärkung verstärkt und mittels der ersten Antenne 11 gesendet. In analoger Weise wird ein zweites Sendesignal 16 von der zweiten Schaltung 12 zur Basisbandverarbeitung und von der zweiten Schaltung 13 zur Hochfrequenzverarbeitung erzeugt, mittels der zweiten Schaltung 14 zur Sende- und Empfangsverstärkung verstärkt und mittels der zweiten Antenne 11 a gesendet.

Fig. 4 zeigt ein schematisches Blockschaltbild einer weiteren Vorrichtung 17 zum gleichzeitigen Senden und/oder gleichzeitigen Empfangen von Signalen. Wie in Fig. 3 umfasst die weitere Vorrichtung 17 eine erste Schaltung 8 zur Basisbandverarbeitung, eine erste Schaltung 9 zur Hochfrequenzverarbeitung, eine erste Schaltung 10 zur Sende- und Empfangsverstärkung, eine zweite Schaltung 12 zur Basisbandverarbeitung, eine zweite Schaltung 13 zur Hochfrequenzverarbeitung und eine zweite Schaltung 14 zur Sende- und Empfangsverstärkung. Weiter umfasst die weitere Vorrichtung 17 eine Schaltung 18 zur Leistungssummierung und -teilung und eine Antenne 19. Hierbei erzeugt die erste Schaltung 8 zur Basisbandverarbeitung und die erste Schaltung 9 zur Hochfrequenzverarbeitung ein erstes Sendesignal 15 und die zweite Schaltung 12 zur Basisbandverarbeitung und die zweite Schaltung 13 zur Hochfrequenzverarbeitung ein zweites Sendesignal 16. Das erste Sendesignal 15 wird mittels der ersten Schaltung 10 zur Sende- und Empfangsverstärkung verstärkt. Das zweite Sendesignal 16 wird mittels der zweiten Schaltung 14 zur Sende- und Empfangsverstärkung verstärkt. Die derart verstärkten Sendesignale 15, 16 werden von der Schaltung 18 zur Leistungssummierung und -teilung summiert und mittels der einen Antenne 19 gesendet.

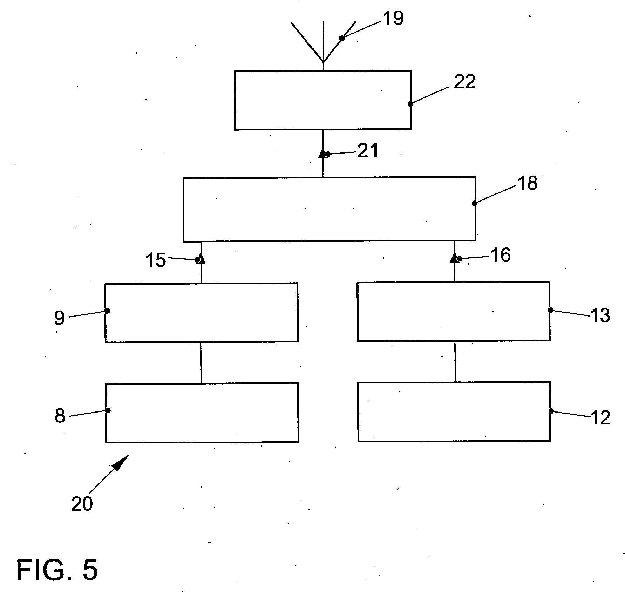

Fig. 5 zeigt ein schematisches Blockschaltbild einer erfindungsgemäßen Vorrichtung 20 zum gleichzeitigen Senden und/oder gleichzeitigen Empfangen von Signalen. Wie.in Fig. 4 umfasst die erfindungsgemäße Vorrichtung 20 eine erste Schaltung 8 zur Basisbandverarbeitung, eine erste Schaltung 9 zur Hochfrequenzverarbeitung, eine zweite Schaltung 12 zur Basisbandverarbeitung und eine zweite Schaltung 13 zur Hochfrequenzverarbeitung. Beim gleichzeitigen Senden erzeugen die erste Schaltung 8 zur Basisbandverarbeitung und die erste Schaltung 9 zur Hochfrequenzverarbeitung ein erstes Sendesignal 15. Gleichzeitig erzeugen die zweite Schaltung 12 zur Basisbandverarbeitung und die zweite Schaltung 13 zur Hochfrequenzverarbeitung ein zweites Sendesignal 16. Das erste Sendesignal 15 und das zweite Sendesignal 16 werden von einer Einheit 18 zur Leistungssummierung und -teilung zu einem kombinierten Sendesignal 21 summiert. Das kombinierte Sendesignal 21 wird von einer Schaltung 22 zur Leistungs- und Empfangsverstärkung verstärkt und mittels der einen Antenne 19 gesendet.

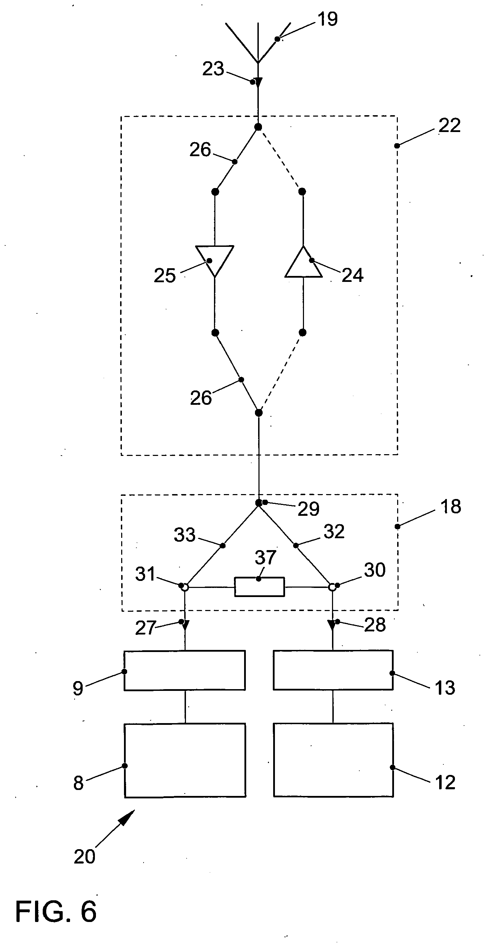

Fig. 6 zeigt ein weiteres schematisches Blockschaltbild der erfindungsgemäßen Vorrichtung 20 zum gleichzeitigen Senden und/oder gleichzeitigen Empfangen von Signalen. Anhand von Fig. 6 wird ein gleichzeitiges Empfangen eines ersten Empfangssignals und eines zweiten Empfangssignals beschrieben. Mittels der einen Antenne 19 empfängt die erfindungsgemäße Vorrichtung 20 ein kombiniertes Empfangssignal 23, welches an eine Schaltung 22 zur Sende- und Empfangsverstärkung datentechnisch übertragen wird. Die Schaltung 22 zur Sende- und Empfangsverstärkung umfasst hierbei eine Schaltung 24 zur Sendeverstärkung und eine Schaltung 25 zur Empfangsverstärkung. Weiter umfasst die die Schaltung 22 zur Sende- und Empfangsverstärkung zwei Umschalter 26. Mittels der Umschalter 26 wird beim gleichzeitigen Empfangen von Signalen die Schaltung 25 zur Empfangsverstärkung in einen Signalübertragungspfad zwischen der einen Antenne 19 und den Schaltungen 8,12 zur Basisbandverarbeitung und den Schaltungen 9, 13 zur Hochfrequenzverarbeitung geschaltet. Beim gleichzeitigen Empfangen von Signalen wird also das kombinierte Empfangssignal 23 mittels der Schaltung 25 zur Empfangsverstärkung mit einer vorbestimmten Empfangsverstärkung verstärkt. Beim gleichzeitigen Senden wird mittels der Umschalter 26 die Schaltung 24 zur Sendeverstärkung in einen Signalübertragungspfad zwischen den Schaltungen 8,12 zur Basisbandverarbeitung und den Schaltungen 9, 13 zur Hochfrequenzverarbeitung und der einen Antenne 19 geschaltet. Beim gleichzeitigen Senden von Signalen wird also ein kombiniertes Sendesignal 21 (siehe Fig. 5) mittels der Schaltung 24 zur Sendeverstärkung mit einer vorbestimmten Sendeverstärkung verstärkt.

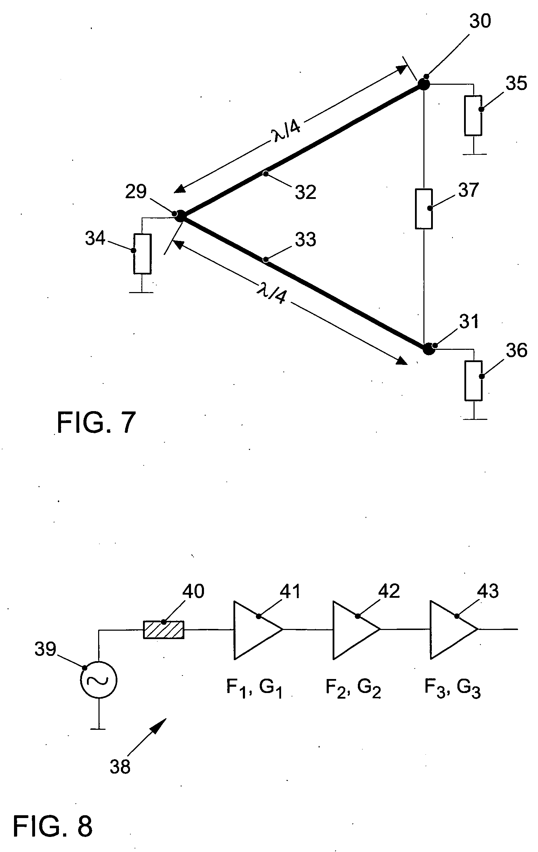

Das verstärkte, kombinierte Empfangssignal 23 wird dann mittels der Schaltung 18 zur Leistungssummierung und -teilung in einen ersten Teil 27 des kombinierten Empfangssignals 23 und einen zweiten Teil 28 des kombinierten Empfangssignals 23 geteilt. Die Schaltung 18 zur Leistungssummierung und -teilung ist hierbei als Wilkinson-Summierer/-Teiler ausgeführt und näher in Fig. 7 erläutert. Der erste Teil 27 wird hierbei datentechnisch an die ersten Schaltungen 8, 9 zur Basisbandverarbeitung und Hochfrequenzverarbeitung übertragen. Diese filtern das erste Empfangssignal aus dem ersten Teil 27 heraus. Analog wird der zweite Teil 28 datentechnisch an die zweiten Schaltungen 12, 13 zur Basisbandverarbeitung und Hochfrequenzverarbeitung übertragen. Diese filtern das zweite Empfangssignal aus dem zweiten Teil 28 heraus.

Fig. 7 zeigt ein schematisches Blockschaltbild eines Wilkinson-Summierers/-Teilers. Der Wilkinson-Summierer/-Teiler weist ein erstes Signaltor 29, ein zweites Signaltor 30 und ein drittes Signaltor 31 auf. Das erste Signaltor 29 ist über eine erste $\lambda/4$-Leitung 32 mit dem zweiten Signaltor 30 und über eine zweite $\lambda/4$-Leitung 33 mit dem dritten Signaltor 31 verbunden. Hierbei bezeichnet eine $\lambda/4$-Leitung 32, 33 eine $\lambda/4$ lange Leitung, wobei $\lambda$ die Wellenlänge des über die Leitung übertragenen Signals, in diesem Fall also des ersten und zweiten Sendesignals 15, 16 oder des ersten und zweiten Teils 27, 28 des kombinierten Empfangssignals 23, bezeichnet. Bei richtiger Dimensionierung, arbeitet der Wilkinson-Teiler verlustfrei, d.h. eine an dem ersten Signaltor 29 eingespeiste Hochfrequenzleistung teilt sich zu je 50% (-3dB) auf das zweite Signaltor 30 und das dritte Signaltor 31 auf. In Fig. 7 ist weiter eine erste Torimpedanz 34, eine zweite Torimpedanz 35 und eine dritte Torimpedanz 36 dargestellt. Die Torimpedanzen 34, 35, 36 stellen hierbei die Impendanzen der an die Signaltore 29, 30, 31 angeschlossenen elektrischen Elemente dar. Weiter sind das zweite Signaltor 30 und das dritte Signaltor 31 über eine vierte Torimpedanz 37 verbunden.

Sind die erste und die zweite und die dritte Torimpedanz 34, 35, 36 gleich, so wird, wenn die vierte Torimpedanz 37 doppelt so hoch wie die z.B. erste Torimpedanz 34 dimensioniert wird, keine Leistung in der vierten Torimpedanz 37 verbraucht. Erst bei unsymmetrisch dimensioniert Torimpedanzen 34, 35, 36 fließt ein Verluststrom durch die vierte Torimpedanz 37.

Fig. 8 zeigt eine beispielhafte Signalgliedkette 38, die als Grundlage für eine Berechnung einer Rauschzahl, also auch einer Rauschzahl der in Fig. 5 und Fig. 6 dargestellten erfindungsgemäßen Vorrichtung 20, dient. Die Signalgliedkette 38 umfasst eine Wechselspannungsquelle 39, einen komplexen Widerstand 40, einen ersten Verstärker 41 mit einer ersten Rauschzahl $F_1$ und einer ersten Verstärkung $G_1$, einen zweiten Verstärker 42 mit einer zweiten Rauschzahl $F_2$ und einer zweiten Verstärkung $G_2$ und einen dritten Verstärker 43 mit einer dritten Rauschzahl $F_3$ und einer dritten Verstärkung $G_3$. Gemäß Formel 1 lässt sich eine Rauschzahl $F_{receiver}$ der gesamten Signalgliedkette 38 berechnen. Analog lassen sich Rauschzahlen auch für eine Signalgliedkette der in Fig. 3 dargestellten Vorrichtung 5 zum gleichzeitigen Senden und/oder gleichzeitigen Empfangen von Signalen, für eine Signalgliedkette der in Fig. 4 dargestellten weiteren Vorrichtung 17 und für eine Signalgliedkette der in Fig. 5 und Fig. 6 dargestellten erfindungsgemäßen Vorrichtung 20 zum gleichzeitigen Senden und/oder gleichzeitigen Empfangen von Signalen herleiten. Hierbei kann gezeigt werden, dass die Rauschzahl der Signalgliedkette der erfindungsgemäßen Vorrichtung 20 ähnlich der Rauschzahl der Signalgliedkette der Vorrichtung 5 und geringer als die Rauschzahl der Signalkette der weiteren Vorrichtung 17 ist.

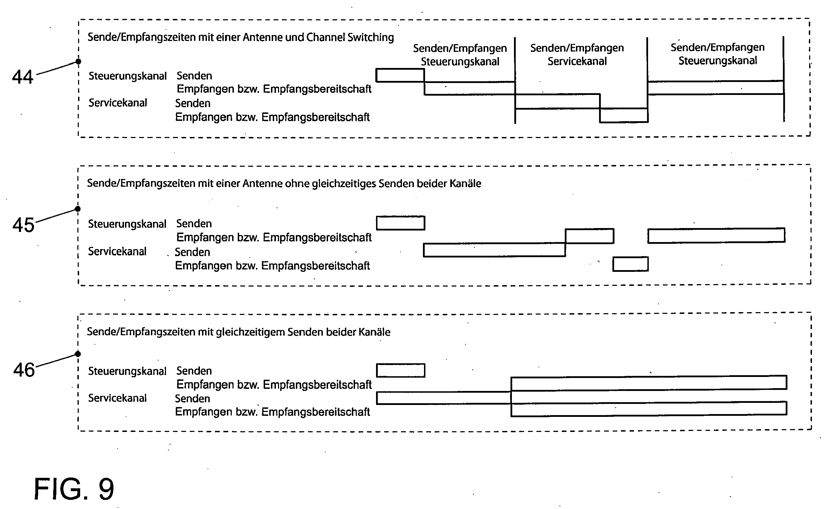

Fig. 9 zeigt eine beispielhafte Übersicht über Sende- und Empfangszeiten mit einer Antenne 19. In einer ersten Alternative 44 wird ein Senden und Empfangen von Signalen über einen Steuerungskanal 3 und einen Servicekanal 1 mit Kanalumschaltung (Channel Switching) dargestellt. Hierbei ist ersichtlich, dass ein Senden oder ein Empfangen oder eine Empfangsbereitschaft nur dann vorliegt, wenn gemäß einem Protokoll der Kanalumschaltung (Channel Switching) der jeweilige Kanal 1, 3 mittels der einen Antenne 19 senden oder empfangen kann.

In einer zweiten Alternative 45 ist ein Senden und Empfangen mit der einen Antenne 19 ohne gleichzeitiges Senden und Empfangen über den Steuerungskanal 3 und den Servicekanal 1 dargestellt. Hierbei kann in bestimmten Zeitintervallen nur jeweils über den Steuerungskanal 3 oder den Servicekanal 1, nicht über beide Kanäle 1, 3 , ein Signal gesendet oder empfangen werden.

In einer dritten Alternative 46 ist ein mittels des erfindungsgemäßen Verfahrens und der erfindungsgemäßen Vorrichtung 20 durchführbares gleichzeitiges Senden und Empfangen mittels der einen Antenne 19 über den Steuerungskanal 3 und den Servicekanal 1 dargestellt. Hierbei kann gleichzeitig, also in denselben Zeitintervallen, ein Signal über den Steuerungskanal 3 und ein Signal über den Servicekanal 1 gesendet oder empfangen werden.

**Bezugszeichenliste**

| | |
|---|---|
| 1 | Servicekanal |
| 2 | weiterer Servicekanal |
| 3 | Steuerungskanal |
| 4 | Servicekanal |
| 5 | Vorrichtung zum gleichzeitigen Senden und/oder gleichzeitigen Empfangen von Signalen |
| 6 | erster Signalübertragungspfad |
| 7 | zweiter Signalübertragungspfad |
| 8 | erste Schaltung zur Basisbandverarbeitung |
| 9 | erste Schaltung zur Hochfrequenzverarbeitung |
| 10 | erste Schaltung zur Sende- und Empfangsverstärkung |
| 11 | erste Antenne |
| 11 a | zweite Antenne |
| 12 | zweite Schaltung zur Basisbandverarbeitung |
| 13 | zweite Schaltung zur Hochfrequenzverarbeitung |
| 14 | zweite Schaltung zur Sende- und Empfangsverstärkung |
| 15 | erstes Sendesignal |
| 16 | zweites Sendesignal |
| 17 | weitere Vorrichtung zum gleichzeitigen Senden und/oder gleichzeitigen Empfangen von Signalen |
| 18 | Schaltung zur Leistungssummierung und -teilung |
| 19 | Antenne |
| 20 | erfindungsgemäße Vorrichtung zum gleichzeitigen Senden und/oder gleichzeitigen Empfangen von Signalen |
| 21 | kombiniertes Sendesignal |
| 22 | Schaltung zur Leistungs- und Empfangsverstärkung |

| 23 | kombiniertes Empfangssignal |
| 24 | Schaltung zur Sendeverstärkung |
| 25 | Schaltung zur Empfangsverstärkung |
| 26 | Umschalter |
| 27 | erster Teil des kombinierten Empfangssignals |
| 28 | zweiter Teil des kombinierten Empfangssignals |
| 29 | erstes Signaltor |
| 30 | zweites Signaltor |
| 31 | drittes Signaltor |
| 32 | erste $/\lambda 4$-Leitung |
| 33 | zweite $\lambda/4$-Leitung |
| 34 | erste Torimpendanz |
| 35 | zweite Torimpedanz |
| 36 | dritte Torimpedanz |
| 37 | vierte Torimpedanz |
| 38 | Signalgliedkette |
| 39 | Wechselspannungsquelle |
| 40 | komplexer Widerstand |
| 41 | erster Verstärker |
| 42 | zweiter Verstärker |
| 43 | dritter Verstärker |
| 44 | Servicekanal |
| 45 | Servicekanal |
| F | Rauschzahl |
| $F_{LNA}$ | Rauschzahl eines rauscharmen Vorverstärkers |
| $F_{receiver}$ | Rauschzahl einer Signalgliedkette |
| $F_1$ | erste Rauschzahl |
| $F_2$ | zweite Rauschzahl |
| $F_3$ | dritte Rauschzahl |
| G | Verstärkung |
| $G_1$ | erste Verstärkung |
| $G_2$ | zweite Verstärkung |
| $G_3$ | dritte Verstärkung |
| $G_{LNA}$ | Verstärkung eines rauscharmen Vorverstärkers |

**Patentansprüche**

1. Verfahren zum gleichzeitigen Senden mindestens eines ersten und eines zweiten Sendesignals (15, 16) oder zum gleichzeitigen Empfangen eines ersten und eines zweiten Empfangssignals mittels einer Antenne (19), wobei das erste Sendesignal (15) von einer ersten Sendeeinrichtung erzeugt und das erste Empfangssignal von einer ersten Empfangseinrichtung empfangen wird, wobei das zweite Sendesignal (16) von einer zweiten Sendeeinrichtung erzeugt und das zweite Empfangssignal von einer zweiten Empfangseinrichtung empfangen wird, wobei das erste Sendesignal (15) und das zweite Sendesignal (16) mittels einer Schaltung zur Leistungssummierung zu einem kombinierten Sendesignal (21) summiert werden, wobei das kombinierte Sendesignal (21) von einer Schaltung (24) zur Sendeverstärkung verstärkt und mittels der Antenne (19) gesendet wird und ein kombiniertes Empfangssignals (23) mittels der Antenne (19) empfangen und mittels einer Schaltung zur Leistungsteilung in einen ersten und einen zweiten Teil (27, 28) des kombinierten Empfangssignals (23) geteilt wird, wobei die erste Empfangseinrichtung das erste Empfangssignal aus dem ersten Teil (27) des kombinierten Empfangssignals (23) und die zweite Empfangseinrichtung das zweite Empfangssignal aus dem zweiten Teil (28) des kombinierten Empfangssignals (23) filtert, **dadurch gekennzeichnet, dass** das kombinierte Empfangssignal (23) mittels einer Schaltung (25) zur Empfangsverstärkung verstärkt wird, wobei mittels mindestens eines Umschalters (26) die Schaltung (24) zur Sendeverstärkung oder die Schaltung (25) zur Empfangsverstärkung oder mittels des mindestens einen Umschalters (26) in einer Schaltung (22) zur Sende- und Empfangsverstärkung eine Sende- und Empfangsverstärkung ausgewählt wird, wobei die Schaltung (22) zur Sende- und Empfangsverstärkung die Schaltung (24) zur Sendeverstärkung und die Schaltung (25) zur Empfangsverstärkung umfasst.

**2.** Verfahren nach Anspruch 1, **dadurch gekennzeichnet, dass** über einen Steuerungskanal (3) das erste Sendesignal (15) und über mindestens einen weiteren Kanal das zweite Sendesignal (16) gesendet oder über den Steuerungskanal (3) das erste Empfangssignal und über den mindestens einen weiteren Kanal das zweite Empfangssignal empfangen wird.

**3.** Verfahren nach Anspruch 2, **dadurch gekennzeichnet, dass** das zweite Sendesignal (16) über weitere Kanäle gesendet oder das zweite Empfangssignal über die weiteren Kanäle empfangen wird, wobei ein Umschalten zwischen den weiteren Kanälen erfolgt.

**4.** Vorrichtung (20) zum gleichzeitigen Senden mindestens eines ersten Sendesignals (15) und eines zweiten Sendesignals (16) und zum gleichzeitigen Empfangen eines ersten und eines zweiten Empfangssignals, wobei die Vorrichtung (20) eine Antenne (19), mindestens eine erste und eine zweite Sendeeinrichtung und mindestens eine erste und eine zweite Empfangseinrichtung umfasst, wobei mittels der ersten Sendeeinrichtung das erste Sendesignal (15) und mittels der zweiten Sendeeinrichtung das zweite Sendesignal (16) erzeugbar ist, wobei mittels der ersten Empfangseinrichtung das erste Empfangssignal und mittels der zweiten Empfangseinrichtung das zweite Empfangssignal empfangbar ist,
wobei
die Vorrichtung (20) eine Schaltung zur Leistungssummierung und eine Schaltung (24) zur Sendeverstärkung umfasst, wobei das erste Sendesignal (15) und das zweite Sendesignal (16) mittels der Schaltung zur Leistungssummierung zu einem kombinierten Sendesignal (21) summierbar sind, wobei das kombinierte Sendesignal (21) mittels der Schaltung (24) zur Sendeverstärkung verstärkbar und mittels der Antenne (19) sendbar ist und
die Vorrichtung (20) eine Schaltung zur Leistungsteilung umfasst, wobei ein kombiniertes Empfangssignal (23) mittels der Antenne (19) empfangbar und mittels der Schaltung zur Leistungsteilung in einen ersten Teil (27) des kombinierten Empfangssignals (23) und einen zweiten Teil (28) des kombinierten Empfangssignals (23) teilbar ist, wobei mittels der ersten Empfangseinrichtung das erste Empfangssignal aus dem ersten Teil (27) des kombinierten Empfangssignals (23) und mittels der zweiten Empfangseinrichtung das zweite Empfangssignal aus dem zweiten Teil (28) des kombinierten Empfangssignals (23) filterbar ist,
**dadurch gekennzeichnet, dass**
die Vorrichtung (20) eine Schaltung (25) zur Empfangsverstärkung umfasst, wobei das kombinierte Empfangssignal (23) mittels der Schaltung zur Empfangsverstärkung verstärkbar ist, wobei die Vorrichtung (20) mindestens einen Umschalter (26) umfasst, wobei mittels des mindestens einen Umschalters (26) die Schaltung (24) zur Sendeverstärkung oder die Schaltung (25) zur Empfangsverstärkung oder mittels des mindestens einen Umschalters (26) in einer Schaltung (22) zur Sende- und Empfangsverstärkung eine Sende- oder Empfangsverstärkung auswählbar ist.

**5.** Vorrichtung (20) nach Anspruch 4, **dadurch gekennzeichnet, dass** die Schaltung zur Leistungssummierung und die Schaltung zur Leistungsteilung als eine Schaltung (18) zur Leistungssummierung und -teilung ausgeführt ist.

**6.** Vorrichtung (20) nach Anspruch 5, **dadurch gekennzeichnet, dass** die Schaltung (18) zur Leistungssummierung und -teilung ein Wilkinson-Teiler/-Summierer ist.

**7.** Vorrichtung (20) nach einem der Ansprüche 4 bis 6, **dadurch gekennzeichnet, dass** die Schaltung (24) zur Sendeverstärkung und die Schaltung (25) zur Empfangsverstärkung als eine Schaltung (22) zur Sende- und Empfangsverstärkung ausgebildet ist.

**8.** Vorrichtung (20) nach einem der Ansprüche 4 bis 7, **dadurch gekennzeichnet, dass** die erste Sendeeinrichtung oder die erste Empfangseinrichtung eine erste Schaltung (9) zur Hochfrequenzverarbeitung und/oder eine erste Schaltung (8) zur Basisbandverarbeitung umfasst und/oder die zweite Sendeeinrichtung oder die zweite Empfangseinrichtung eine zweite Schaltung (13) zur Hochfrequenzverarbeitung und/oder eine zweite Schaltung (12) zur Basisbandverarbeitung umfasst.

**Claims**

**1.** Method for simultaneously transmitting at least a first transmission signal (15) and a second transmission signal (16) or for simultaneously receiving a first reception signal and a second reception signal by means of an antenna (19), wherein the first transmission signal (15) is generated by a first transmitting device and the first reception signal is received by a first receiving device, wherein the second transmission signal (16) is generated by a second transmitting device and the second reception signal is received by a second receiving device,

wherein the first transmission signal (15) and the second transmission signal (16) are summed to form a combined transmission signal (21) by means of a power summation circuit, wherein the combined transmission signal (21) is amplified by a transmission amplification circuit (24) and is transmitted by means of the antenna (19), and a combined reception signal (23) is received by means of the antenna (19) and is divided into a first part (27) and a second part (28) of the combined reception signal (23) by means of a power division circuit, wherein the first receiving device filters the first reception signal from the first part (27) of the combined reception signal (23) and the second receiving device filters the second reception signal from the second part (28) of the combined reception signal (23), **characterized in that** the combined reception signal (23) is amplified by means of a reception amplification circuit (25), wherein

the transmission amplification circuit (24) or the reception amplification circuit (25) is selected by means of at least one changeover switch (26) or transmission and reception amplification is selected by means of the at least one changeover switch (26) in a transmission and reception amplification circuit (22), wherein the transmission and reception amplification circuit (22) comprises the transmission amplification circuit (24) and the reception amplification circuit (25).

2. Method according to Claim 1, **characterized in that** the first transmission signal (15) is transmitted via a control channel (3) and the second transmission signal (16) is transmitted via at least one further channel, or the first reception signal is received via the control channel (3) and the second reception signal is received via the at least one further channel.

3. Method according to Claim 2, **characterized in that** the second transmission signal (16) is transmitted via further channels or the second reception signal is received via the further channels, wherein changing over between the further channels is carried out.

4. Apparatus (20) for simultaneously transmitting at least a first transmission signal (15) and a second transmission signal (16) and for simultaneously receiving a first reception signal and a second reception signal, wherein the apparatus (20) comprises an antenna (19), at least a first transmitting device and a second transmitting device and at least a first receiving device and a second receiving device, wherein the first transmission signal (15) can be generated by means of the first transmitting device and the second transmission signal (16) can be generated by means of the second transmitting device, wherein the first reception signal can be received by means of the first receiving device and the second reception signal can be received by means of the second receiving device, wherein

the apparatus (20) comprises a power summation circuit and a transmission amplification circuit (24), wherein the first transmission signal (15) and the second transmission signal (16) can be summed to form a combined transmission signal (21) by means of the power summation circuit, wherein the combined transmission signal (21) can be amplified by means of the transmission amplification circuit (24) and can be transmitted by means of the antenna (19), and

the apparatus (20) comprises a power division circuit, wherein a combined reception signal (23) can be received by means of the antenna (19) and can be divided into a first part (27) of the combined reception signal (23) and a second part (28) of the combined reception signal (23) by means of the power division circuit, wherein the first reception signal can be filtered from the first part (27) of the combined reception signal (23) by means of the first receiving device and the second reception signal can be filtered from the second part (28) of the combined reception signal (23) by means of the second receiving device,

**characterized in that**

the apparatus (20) comprises a reception amplification circuit (25), wherein the combined reception signal (23) can be amplified by means of the reception amplification circuit, wherein the apparatus (20) comprises at least one changeover switch (26), wherein the transmission amplification circuit (24) or the reception amplification circuit (25) can be selected by means of the at least one changeover switch (26) or transmission or reception amplification can be selected by means of the at least one changeover switch (26) in a transmission and reception amplification circuit (22).

5. Apparatus (20) according to Claim 4, **characterized in that** the power summation circuit and the power division circuit are in the form of a power summation and division circuit (18).

6. Apparatus (20) according to Claim 5, **characterized in that** the power summation and division circuit (18) is a Wilkinson divider/summer.

7. Apparatus (20) according to one of Claims 4 to 6, **characterized in that** the transmission amplification circuit (24) and the reception amplification circuit (25) are in the form of a transmission and reception amplification circuit (22).

8. Apparatus (20) according to one of Claims 4 to 7, **characterized in that** the first transmitting device or the first receiving device comprises a first radio-frequency processing circuit (9) and/or a first baseband processing circuit (8) and/or the second transmitting device or the second receiving device comprises a second radio-frequency processing circuit (13) and/or a second baseband processing circuit (12).

**Revendications**

1. Procédé pour l'émission simultanée d'au moins un premier et un deuxième signal d'émission (15, 16) ou pour la réception simultanée d'un premier et d'un deuxième signal de réception au moyen d'une antenne (19), dans lequel le premier signal d'émission (15) est généré par un premier dispositif d'émission et le premier signal de réception est reçu par un premier dispositif de réception, dans lequel le deuxième signal d'émission (16) est généré par un deuxième dispositif d'émission et le deuxième signal de réception est reçu par un deuxième dispositif de réception, dans lequel le premier signal d'émission (15) et le deuxième signal d'émission (16) sont sommés au moyen d'un circuit de sommation de puissance en un signal d'émission combiné (21), dans lequel le signal d'émission combiné (21) est amplifié par un circuit (24) d'amplification d'émission et est émis au moyen de l'antenne (19) et un signal de réception combiné (23) est reçu au moyen de l'antenne (19) et est divisé au moyen d'un circuit de division de puissance en des première et deuxième parties (27, 28) du signal de réception combiné (23), dans lequel le premier dispositif de réception filtre le premier signal de réception à partir de la première partie (27) du signal de réception combiné (23) et le deuxième dispositif de réception filtre le deuxième signal de réception à partir de la deuxième partie (28) du signal de réception combiné (23), **caractérisé en ce que** le signal de réception combiné (23) est amplifié au moyen d'un circuit (25) d'amplification de réception,
dans lequel le circuit (24) d'amplification d'émission ou le circuit (25) d'amplification de réception est sélectionné au moyen d'au moins un commutateur (26) ou une amplification d'émission et de réception est sélectionnée au moyen de l'au moins un commutateur (26) dans un circuit (22) d'amplification d'émission et de réception, dans lequel le circuit (22) d'amplification d'émission et de réception comprend le circuit (24) d'amplification d'émission et le circuit (25) d'amplification de réception.

2. Procédé selon la revendication 1, **caractérisé en ce que** le premier signal d'émission (15) est émis par l'intermédiaire d'un canal de commande (3) et **en ce que** le deuxième signal d'émission (16) est émis par l'intermédiaire d'un autre canal ou **en ce que** le premier signal de réception est reçu par l'intermédiaire du canal de commande (3) et **en ce que** le deuxième signal de réception est reçu par l'intermédiaire d'un autre canal.

3. Procédé selon la revendication 2, **caractérisé en ce que** le deuxième signal d'émission (16) est émis par l'intermédiaire d'autres canaux ou **en ce que** le deuxième signal de réception est reçu par l'intermédiaire des autres canaux, dans lequel un basculement est effectué entre les autres canaux.

4. Dispositif (20) pour l'émission simultanée d'au moins un premier signal d'émission (15) et d'un deuxième signal de réception (16) et pour la réception simultanée d'un premier et d'un deuxième signal de réception, dans lequel le dispositif (20) comprend une antenne (19), au moins un premier et un deuxième dispositif d'émission et au moins un premier et un deuxième dispositif de réception, dans lequel le premier signal d'émission (15) peut être généré au moyen du premier dispositif d'émission et le deuxième signal d'émission (16) peut être généré au moyen du deuxième dispositif d'émission, dans lequel le premier signal de réception peut être reçu au moyen du premier dispositif de réception et le deuxième signal de réception peut être reçu au moyen du deuxième dispositif de réception, dans lequel
le dispositif (20) comprend un circuit de sommation de puissance et un circuit (24) d'amplification d'émission, dans lequel le premier signal d'émission (15) et le deuxième signal d'émission (16) peuvent être sommés au moyen du circuit de sommation de puissance en un signal d'émission combiné (21), dans lequel le signal d'émission combiné (21) peut être amplifié au moyen du circuit (24) d'amplification d'émission et être émis au moyen de l'antenne (19), et le dispositif (20) comprend un circuit de division de puissance, dans lequel un signal de réception combiné (23) peut être reçu au moyen de l'antenne (19) et peut être divisé au moyen du circuit de division de puissance en une première partie (27) du signal de réception combiné (23) et une deuxième partie (28) du signal de réception combiné (23), dans lequel le premier signal de réception peut être filtré au moyen du premier dispositif de réception à partir de la première partie (27) du signal de réception combiné (23) et le deuxième signal de réception peut être filtré au moyen du deuxième dispositif de réception à partir de la deuxième partie (28) du signal de réception combiné (23), **caractérisé en ce que** le dispositif (20) comprend un circuit (25) d'amplification de réception, dans lequel le signal de réception combiné (23) peut être amplifié au moyen du circuit d'amplification de réception, dans lequel le dispositif (20) comprend au moins un commutateur (26), dans lequel le circuit (24) d'amplification d'émission ou le circuit (25) d'amplification de réception peut être sélectionné au moyen de l'au moins un commutateur (26) ou une amplification d'émission ou de réception peut être sélectionnée au moyen de l'au moins un commutateur (26) dans un circuit (22) d'amplification d'émission et de réception.

5. Dispositif (20) selon la revendication 4, **caractérisé en ce que** le circuit de sommation de puissance et le circuit de division de puissance sont réalisés sous la forme d'un circuit (18) de sommation et de division de puissance.

6. Dispositif (20) selon la revendication 5, **caractérisé en ce que** le circuit (18) de sommation et de division de puissance est un diviseur/sommateur de Wilkinson.

7. Dispositif (20) selon l'une quelconque des revendications 4 à 6, **caractérisé en ce que** le circuit (24) d'amplification d'émission et le circuit (25) d'amplification de réception sont réalisés sous la forme d'un circuit (22) d'amplification d'émission et de réception.

8. Dispositif (20) selon l'une quelconque des revendications 4 à 7, **caractérisé en ce que** le premier dispositif d'émission ou le premier dispositif de réception comprend un premier circuit (9) de traitement à haute fréquence et/ou un premier circuit (8) de traitement en bande de base et/ou le deuxième dispositif d'émission ou le deuxième dispositif de réception comprend un deuxième circuit (13) de traitement à haute fréquence et/ou un deuxième circuit (12) de traitement en bande de base.

Stand der Technik

FIG. 1

| Channel type | Centre frequency | IEEE [4] ch number | Channel spacing | Default data rate | TX power limit | TX power density limit |
|---|---|---|---|---|---|---|
| G5CC | 5900 MHz | | 10 MHz | 6 Mbit/s | 33 dBm EIRP | 23 dBm/MHz |
| G5SC2 | 5890 MHz | | 10 MHz | 12 Mbit/s | 23 dBm EIRP | 13 dBm/MHz |
| G5SC1 | 5880 MHz | | 10 MHz | 6 Mbit/s | 33 dBm EIRP | 23 dBm/MHz |
| G5SC3 | 5870 MHz | | 10 MHz | 6 Mbit/s | 23 dBm EIRP | 13 dBm/MHz |
| G5SC4 | 5860 MHz | | 10 MHz | 6 Mbit/s | 0 dBm EIRP | -10 dBm/MHz |
| G5SC5 | As required in [2] for the band 5470 MHz to 5725 MHz | | several | dependent on channel spacing | 30 dBm EIRP (DFS master) | 17 dBm/MHz |
| | | | | | 23 dBm EIRP (DFS slave) | 10 dBm/MHz |

Stand der Technik

FIG. 2

Stand der Technik

FIG. 3

Stand der Technik

FIG. 4

FIG. 5

FIG. 6

FIG. 7

FIG. 8

FIG. 9

44 — Sende/Empfangszeiten mit einer Antenne und Channel Switching

Steuerungskanal — Senden / Empfangen bzw. Empfangsbereitschaft
Servicekanal — Senden / Empfangen bzw. Empfangsbereitschaft

Senden/Empfangen Steuerungskanal | Senden/Empfangen Servicekanal | Senden/Empfangen Steuerungskanal

45 — Sende/Empfangszeiten mit einer Antenne ohne gleichzeitiges Senden beider Kanäle

Steuerungskanal — Senden / Empfangen bzw. Empfangsbereitschaft
Servicekanal — Senden / Empfangen bzw. Empfangsbereitschaft

46 — Sende/Empfangszeiten mit gleichzeitigem Senden beider Kanäle

Steuerungskanal — Senden / Empfangen bzw. Empfangsbereitschaft
Servicekanal — Senden / Empfangen bzw. Empfangsbereitschaft

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5550813 A

- EP 0720309 A2